# EUROPEAN PATENT APPLICATION

(11) **EP 3 885 872 A1**
(43) Date of publication of application: **29.09.2021**
(21) Application number: 20166407.5
(22) Date of filing: 27.03.2020
(51) Int. Cl.: G05D 1/10, G08G 5/00, B64C 39/02, G01C 21/00

(54) **SYSTEM AND METHOD FOR DETERMINING POSITIONS OF UNMANNED AERIAL VEHICLES DURING FLIGHT**

(71) Applicant: Shhuna GmbH, 81543 München (DE)
(72) Inventor: Dürr, Pawel, 86916 Kaufering (DE); Platonov, Juri, 82031 Grünwald (DE)
(74) Representative: Zimmermann & Partner Patentanwälte mbB

(57) **Abstract**

A System (100) for determining positions of unmanned aerial vehicles (UAVs) during flight is provided. The system comprises a first plurality of UAVs (110) and a second plurality of UAVs (120). The system further comprises a control system (130) and a measurement system (140). The control system (130) comprises one or more controllers (132) and the measurement system (140) comprises a plurality of measurement devices (142, 144). Each measurement device of the plurality of measurement devices (142, 144) is carried by an unmanned aerial vehicle (UAV) of the first plurality of UAVs (110) or by an UAV of the second plurality of UAVs (120). The measurement system (140) is configured to perform measurements providing at least partial information about relative positions between UAVs of the first plurality of UAVs (110) and UAVs of the second plurality of UAVs (120). The first plurality of UAVs (110) is configured to form an arrangement functioning as a reference frame relative to which the UAVs of the second plurality of UAVs (120) are located. The control system (130) is configured to determine a position of each UAV of the second plurality of UAVs (120) with respect to the reference frame provided by the first plurality of UAVs (110). The determination of the position of a UAV of the second plurality of UAVs (120) with respect to the reference frame is performed by at least the following operations: Receiving first and second measurement data (172, 174) from the measurement system (140), wherein the first and second measurement data (172, 174) includes partial information about a relative position of the UAV of the second plurality of UAVs (120) with respect to a first and a second UAV of the first plurality of UAVs (110), respectively. The control system (130) further performs determining a position of the UAV of the second plurality of UAVs (120) with respect to the reference frame based at least on the received first measurement data (172) and the received second measurement data (174).

## Description

### FIELD

Embodiments of the present disclosure relate to systems and methods for determining positions of unmanned aerial vehicles during flight. In particular, the systems and methods described herein relate to the navigation of a plurality of unmanned aerial vehicles performing synchronized flight maneuvers, e.g. to perform an aerial display with the plurality of unmanned aerial vehicles acting as picture elements of the aerial display.

### BACKGROUND

While they originated mostly in military applications, unmanned aerial vehicles (UAVs) have since then been used in numerous other applications, such as agriculture, product delivery and entertainment.

For example, for entertainment applications, a set-up of multiple UAVs can be used to perform an aerial show. The UAVs can each carry a light source. The ensemble of all light sources carried by the UAVs can be used to display an image in the sky, wherein each individual light source acts as a picture element of an aerial display. Usually, such aerial shows involve a large number of UAVs. Typically, controlling a large number of UAVs requires a big effort in preparation and planning. Complex, large-scale installations are often needed for controlling the respective flight routes of the UAVs during the aerial display. Moreover, having a large number of UAVs is often associated with high costs. For example, the UAVs can carry cost-intensive high-precision sensors and electronics, e.g. GPS or RTK positioning equipment for localization with respect to the global coordinate system.

Accordingly, there is a need for improved systems and methods for determining positions of unmanned aerial vehicles during flight and/or for controlling or navigating unmanned aerial vehicles during flight.

### SUMMARY

According to an embodiment, a system for determining positions of unmanned aerial vehicles (UAVs) during flight is provided. The system comprises a first plurality of UAVs and a second plurality of UAVs. The system further comprises a control system and a measurement system. The control system comprises one or more controllers and the measurement system comprises a plurality of measurement devices. Each measurement device of the plurality of measurement devices is carried by an unmanned aerial vehicle (UAV) of the first plurality of UAVs or by an UAV of the second plurality of UAVs. The measurement system is configured to perform measurements providing at least partial information about relative positions between UAVs of the first plurality of UAVs and UAVs of the second plurality of UAVs, e.g. distances between an UAV of the second plurality of UAVs and one or more UAVs of the first plurality of UAVs. The first plurality of UAVs is configured to form an arrangement functioning as a reference frame relative to which the UAVs of the second plurality of UAVs are located. The control system is configured to determine a position of each UAV of the second plurality of UAVs with respect to the reference frame provided by the first plurality of UAVs. The determination of the position of a UAV of the second plurality of UAVs with respect to the reference frame is performed by at least the following operations:
- Receiving first measurement data from the measurement system, wherein the first measurement data includes partial information about a relative position of the UAV of the second plurality of UAVs with respect to a first UAV of the first plurality of UAVs;
- Receiving second measurement data from the measurement system, wherein the second measurement data includes partial information about a relative position of the UAV of the second plurality of UAVs with respect to a second UAV of the first plurality of UAVs; and
- Determining a position, e.g. a position vector, of the UAV of the second plurality of UAVs with respect to the reference frame based at least on the received first measurement data and the received second measurement data.

According to a further embodiment, a method for determining positions of UAVs during flight is provided. The method comprises providing a take-off of a first plurality of UAVs and providing a take-off of a second plurality of UAVs. The method further comprises operating the first plurality of UAVs to form an arrangement functioning as a reference frame. The second plurality of UAVs may be located with respect to the reference frame. The method further comprises performing a plurality of measurements using a measurement system. The measurements may provide, for each UAV of the second plurality of UAVs, at least partial information about a relative position of the UAV of the second plurality of UAVs with respect to at least two UAVs of the first plurality of UAVs. The method further comprises determining a position of each UAV of the second plurality of UAVs with respect to the reference frame using a control system. The determination of the position of a UAV of the second plurality of UAVs with respect to the reference frame is performed by at least the following operations:
- Receiving first measurement data from the measurement system, wherein the first measurement data includes partial information about a relative position of the UAV of the second plurality of UAVs with respect to a first UAV of the first plurality of UAVs;
- Receiving second measurement data from the measurement system, wherein the second measurement data includes partial information about a relative position of the UAV of the second plurality of UAVs with respect to a second UAV of the first plurality of UAVs; and
- Determining a position, e.g. a position vector, of the UAV of the second plurality of UAVs with respect to the reference frame based at least on the received first measurement data and the received second measurement data.

Embodiments of the methods may be carried out by one of the disclosed embodiments of the system for determining positions of UAVs during flight. Furthermore, embodiments according to the disclosure are also directed at methods for operating the described system. The methods for operating the described system include method aspects for carrying out every function of the system.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:
- FIG. 1: shows an illustrative example of a system as described herein;
- FIG. 2: shows an illustrative example of determination of UAV positions with a base system;
- FIG. 3: shows an illustrative example of the system configured as aerial display;
- FIG. 4: shows an illustrative example of a determination of a UAV position with respect to a reference frame;
- FIG. 5: shows an illustrative example of radio-based determination of UAV positions;
- FIG. 6: shows an illustrative example of optical-based determination of UAV positions; and
- FIG. 7: shows an illustrative flow chart of a method as described herein.

### DETAILED DESCRIPTION OF EMBODIMENTS

Reference will now be made in detail to the various embodiments of the disclosure, one or more examples of which are illustrated in the figures. Within the following description of the drawings, the same reference numbers refer to same components. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield yet a further embodiment. It is intended that the description includes such modifications and variations.

The exemplary systems shown in the figures are often relatively small, i.e. these systems involve a relatively small number of UAVs. Such examples are provided for the sake of clarity of exposition and for facilitating an understanding of the present disclosure, and shall not be construed as a limitation of the scope. Particularly, systems of arbitrary size and complexity, particularly both small systems including few UAVs and large systems including a large number of UAVs, are covered by embodiments described herein.

According to an embodiment, a system for determining positions of UAVs during flight is provided. The system includes a first plurality of UAVs and a second plurality of UAVs. The system further includes a control system and a measurement system. The control system includes one or more controllers. The measurement system includes a plurality of measurement devices. Each measurement device of the plurality of measurement devices is carried by a UAV of the first plurality of UAVs or by a UAV of the second plurality of UAVs. The measurement system is configured to perform measurements providing at least partial information about relative positions between UAVs of the first plurality of UAVs and UAVs of the second plurality of UAVs, e.g. distances between an UAV of the second plurality of UAVs and one or more UAVs of the first plurality of UAVs. The first plurality of UAVs is configured to form an arrangement functioning as a reference frame relative to which the UAVs of the second plurality of UAVs are located. The control system is configured to determine a position of each UAV of the second plurality of UAVs with respect to the reference frame provided by the first plurality of UAVs. Determining the position of each UAV of the second plurality of UAVs with respect to the reference frame includes least the following operations:
- receiving first measurement data from the measurement system, wherein the first measurement data includes partial information about a relative position of the UAV of the second plurality of UAVs with respect to a first UAV of the first plurality of UAVs;
- receiving second measurement data from the measurement system, wherein the second measurement data includes partial information about a relative position of the UAV of the second plurality of UAVs with respect to a second UAV of the first plurality of UAVs; and
- determining a position, e.g. a position vector, of the UAV of the second plurality of UAVs with respect to the reference frame based at least on the received first measurement data and the received second measurement data.

An unmanned aerial vehicle (UAV), as described herein, can be understood as a drone.

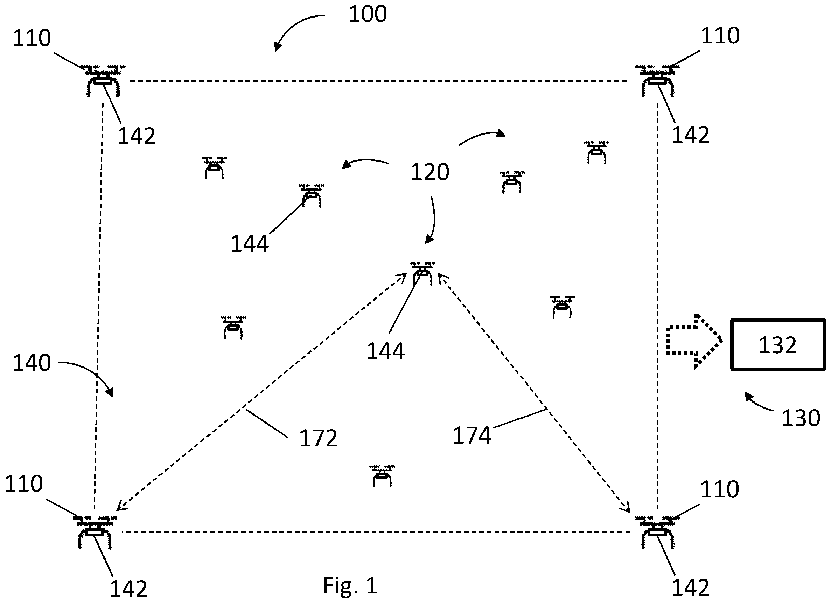

Fig. 1 shows an illustrative example of a system 100 for determining positions of unmanned aerial vehicles (UAVs) during flight according to embodiments described herein. The system 100 includes a first plurality of unmanned aerial vehicles (UAVs) 110 and a second plurality of UAVs 120.

As shown for example in Fig. 1, each UAV of the first plurality of UAVs 110 can carry a measurement device 142. Each UAV of the second plurality of UAVs 120 can carry a measurement device 144. The measurement devices 142 and 144 can belong to a measurement system 140.

The measurement system 140 including the measurement devices 142, 144 may comprise a plurality of transmitters configured to transmit signals. For example, a transmitter may be an optical transmitter, like an infra-red (IR) light emitting device, or a radio transmitter configured to emit radio frequencies, e.g. ultra-wideband (UWB).

The measurement system 140 including the measurement devices 142, 144 may comprise a plurality of receivers configured to receive signals transmitted by at least some of the transmitters. For example, a receiver may include an optical sensor, like an IR sensitive camera, or a radio receiver, like an UWB anchor, configured to receive radio signals or frequencies. These examples are will be further described below.

For example, each measurement device 142 carried by a UAV of the first plurality of UAVs 110 can be a transmitter and each measurement device 144 carried by a UAV of the second plurality of UAVs 120 can be a receiver, or vice versa.

The measurement devices 142, 144 may be configured to perform measurements that provide at least partial information about a relative position of each UAV of the second plurality of UAVs 120 with respect to at least two UAVs of the first plurality of UAVs 110.

Partial information about a relative position of a UAV of the second plurality of UAVs 120 with respect to a UAV of the first plurality of UAVs 110 may include, for example, a distance between the respective UAVs and/or a direction in which the UAV of the second plurality of UAVs 120 is located relative to the UAV of the first plurality of UAVs 110. The term "partial information" can be understood as being distinguished from "full information". Partial information in itself may not be sufficient to fully determine the relative position of the UAV of the second plurality of UAVs 120 with respect to the UAV of the first plurality of UAVs 110. For example, if only the distance between the two UAVs is known, the UAV of the second plurality of UAVs 120 may in principle be located anywhere on a sphere around the UAV of the first plurality of UAVs 110. Likewise, if only the direction is known, the UAV of the second plurality of UAVs 120 may in principle be located anywhere on an axis extending through the UAV of the first plurality of UAVs 110.

As illustrated for example in Fig. 1, some of the measurement devices 142 and 144 may perform measurements resulting in first measurement data 172 and second measurement data 174. The first measurement data 172 can provide partial information about a relative position of a UAV of the second plurality of UAVs 120 with respect to a first UAV of the first plurality of UAVs 110. The second measurement data 174 can provide partial information about a relative position of the same UAV of the second plurality of UAVs 120 with respect to a second UAV of the first plurality of UAVs 110.

For example, the first measurement data 172 may include a measured time difference of the arrival of signals that are transmitted between the measurement device 144 carried by the UAV of the second plurality of UAVs 120 and the measurement device 142 carried by the first UAV of the first plurality of UAVs 110. The second measurement data 174 may include a measured time difference of the arrival of signals that are transmitted between the measurement device 144 carried by the UAV of the second plurality of UAVs 120 and the measurement device 142 carried by the second UAVs of the first plurality of UAVs 110. The measured time differences may allow a determination of a distance between the respective transmitting and receiving UAVs. The time differences may provide at least partial information about a relative position of the UAV of the second plurality of UAVs 120 with respect to the first and second UAV of the first plurality of UAVs 110.

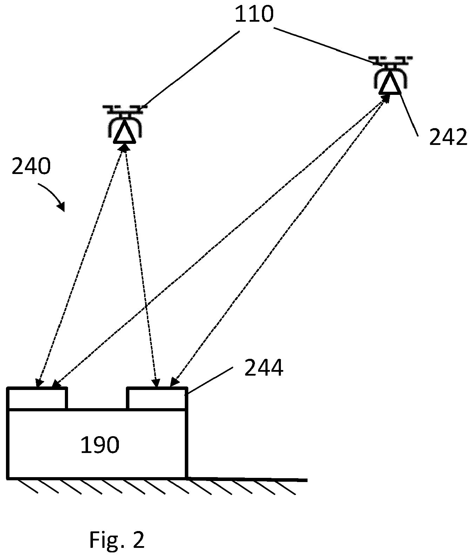

The first plurality of UAVs 110 can be positioned with respect to a base system 190. For example, a base system 190 may be located at the ground level, as illustrated in Fig. 2. According to one aspect, the measurement system 140 is a first measurement system. The system 100 may further include a second measurement system 240, as shown for example in Fig. 2. The second measurement system 240 may comprise a second plurality of measurement devices, e.g. measurement devices 242, 244 shown in Fig. 2. The control system 130 may be configured to determine a position of each UAV of the first plurality of UAVs relative to the base system 190. Positioning of the first plurality of UAVs 110 can involve, for example, using a satellite navigation system.

As illustrated for example in Fig. 1, the first plurality of UAVs 110 can be configured to form an arrangement during flight. The arrangement can have a substantially regular geometric shape. In Fig. 1, the first plurality of UAVs 110 forms an arrangement having a substantially rectangular shape, but the arrangement may also exhibit other geometric shapes as will be further described below. The arrangement may function as a reference frame. The UAVs of the second plurality of UAVs 120 can be located with respect to the reference frame. The position of each UAV of the second plurality of UAVs 120 with respect to the reference frame may be determined using the control system 130.

As illustrated for example in Fig. 1, the control system 130 may at least receive the first measurement data 172 and the second measurement data 174 from the measurement system 140 for determining the position of a UAV of the second plurality of UAVs. The control system 130 can determine a position of the UAV with respect to the reference frame based at least on the received first measurement data 172 and the received second measurement data 174.

For example, the reference frame may be provided by the first plurality of UAVs 110 functioning as flying beacons for the second plurality of UAVs 120. In some embodiments, the first plurality of UAVs 110 may send out signals, e.g. radio signals, and the second plurality of UAVs 120 receives the signals. For each UAV of the second plurality of UAVs, the relative distance to two or more, such as at least three or at least four, UAVs of the first plurality of UAVs 110 can be calculated, e.g. by measuring the time differences of the arrival of the signals. Based on these signals, the position of each UAV of the second plurality of UAVs 120 relative to the reference frame can be determined (e.g. by triangulation).

In some implementations, positioning of the UAVs of the first plurality of UAVs 110, for example with respect to the global coordinate system, may involve long-range positioning equipment, e.g. satellite receivers, GPS, DGPS or RTK positioning equipment.

Since the determination of the positions of the UAVs of the second plurality of UAVs 120 may be determined with respect to the reference frame provided by the first plurality of UAVs 110, embodiments described herein provide the advantage that it is not necessary to determine the position of the UAVs of the second plurality of UAVs 120 using a global positioning system or another (permanently) installed positioning system. The UAVs of the second plurality of UAVs 120 may be localized and perform their function without carrying heavy, cost-intensive and/or long-range positioning equipment like GPS, DGPS or RTK positioning equipment.

At least some, preferably all, UAVs of the first plurality of UAVs 110 may be UAVs of a first type. The UAVs of the second plurality of UAVs 120 may be UAVs of a second type, wherein the second type is different from the first type.

The UAVs of the second plurality of UAVs 120 may be very simple UAVs. An UAV of the second type may be considered a UAV that has a relatively small size, weight and/or is only able to carry a relatively small weight, especially, as compared to the UAVs of the first type. For example, for localization of the UAVs of the second plurality of UAVs 120 with respect to the reference frame, the UAVs of the second plurality of UAVs 120 may be equipped with a simple receiver like a radio receiver or a simple transmitter like a light emitting device. For example, the UAVs of the second plurality of UAVs 120 may be "micro UAVs" or "microdrones".

An UAV of the second type may be not larger than 15 cm, preferably not larger than 10 cm, and/or not heavier than 40 grams, preferably not heavier than 20 grams.

An UAV of the second type may have a size and/or weight which is smaller than a size and/or weight of an UAV of the first type. For example, an UAV of the second type may have a size which is 30 % or less, particularly, 15 % or less of a size of an UAV of the first type. For example, an UAV of the second type may have a weight which is 20 % or less, particularly, 10 % or less of a weight of an UAV of the first plurality of UAVs 110.

As the system 100 may only need a small number (e.g. two, four, six or eight) of UAVs of the first type for the first plurality of UAVs 110, a cost-effective system may be provided even with a large number of UAVs of the second plurality of UAVs 120 since the latter may be affordable UAVs of the second type.

The second plurality of UAVs 120 may have a greater number of UAVs than the first plurality of UAVs 110. For example, the number of UAVs of the second plurality of UAVs 120 may be at least two times greater, than the number of UAVs of the first plurality of UAVs 120. In some embodiments, the number of UAVs of the second plurality of UAVs 120 may be at least three or four times greater than the number of UAVs of the first plurality of UAVs 120.

Furthermore, as the UAVs of the second type may be relatively small, the system may be transportable without large effort even with a large number of UAVs of the second plurality of UAVs 120. In particular, the system may provide be a highly mobile and flexible system for determining positions of UAVs of the second plurality of UAVs 120 during flight and/or navigating UAVs of the second plurality of UAVs 120 during flight.

For example, the system 100 may be configured to perform an aerial display. For performing an aerial display at least some, preferably all, UAVs of the second plurality of UAVs 120 may include a light source, such as an LED array. The UAVs may act as aerial picture elements of the aerial display.

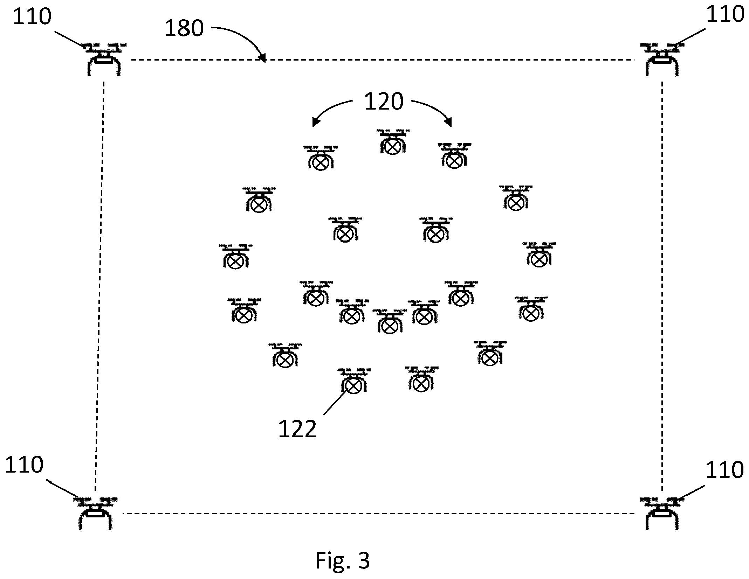

Fig. 3 shows an illustrative example of a system 100 configured to perform an aerial display 180. Fig. 3 shows an arrangement of the first plurality of UAVs 110 which delimits an aerial space for the aerial display 180. Each of the UAVs of the second plurality of UAVs 120 may carry a light source 122. The second plurality of UAVs 120 may be provided with a flight plan allowing a choreographed movement of the second plurality of UAVs 120 and, thus, of the light sources 122. The UAVs of the second plurality of UAVs 120 may fly according to the flight plan such that the combination of the light sources 122 may be recognized as an image. Each UAV of the second plurality of UAVs 120 may correspond to a picture element of the image. For example, in Fig. 3 the light sources 122 of the second plurality of UAVs 120 form an image of a smiling face.

Since the UAVs of the second plurality of UAVs 120 may be of the small and/or cost-effective second type, system 100 may be a cost-effective, mobile and flexible aerial display even when a large number of picture elements, i.e. UAVs of the second plurality of UAVs 120, are involved. The system 100 may be used to perform an aerial display at a first geographical location and later the aerial display may be performed at a second geographical location without need of installing a complex positioning system. In light of the above, embodiments described herein provide for a cost-effective, mobile and flexible system for performing an aerial display at small-to mid-scale events, such as corporate events or private birthday parties.

Next, a detailed description of embodiments is provided. The different embodiments described herein can be combined with each other. Reference signs referring to the Figures are for illustration only, and are not intended to limit the respective aspect(s) to the embodiments shown in the Figures.

As described herein, the control system is configured for determining a position of each UAV of the second plurality of UAVs with respect to the reference frame based at least on received first measurement data and received second measurement data. Determining the position of the UAV of the second plurality of UAVs with respect to the reference frame may allow or include determining a set of spatial coordinates for the UAV of the second plurality of UAVs, e.g. a 3-dimensional coordinate vector, representing the position of the UAV. The set of spatial coordinates may be spatial coordinates in a coordinate system associated with the reference frame. Determining the position of the UAV of the second plurality of UAVs with respect to the reference frame may include determining a position of the UAV relative to a UAV of the first plurality of UAVs. The UAV of the first plurality of UAVs may represent an origin of the reference frame, such as an origin of a coordinate system associated with the reference frame.

The act of determining a position of a UAV of the second plurality of UAVs relative to the reference frame based at least on received first measurement data and received second measurement data can be understood in the sense that the position of the UAV relative to the reference frame is fully determined. For example, determining the position of the UAV relative to the reference frame can include determining the X-, Y- and Z-component of a 3-dimensional position vector of the UAV, or determining both a radial distance and an angle representing the position of the UAV. It shall be understood that there are many other possible ways of determining and representing a position of an UAV (e.g. different types of coordinate systems, different locations for the origin, and so on), and the present disclosure is not limited to a particular representation of the position of an UAV relative to the reference frame.

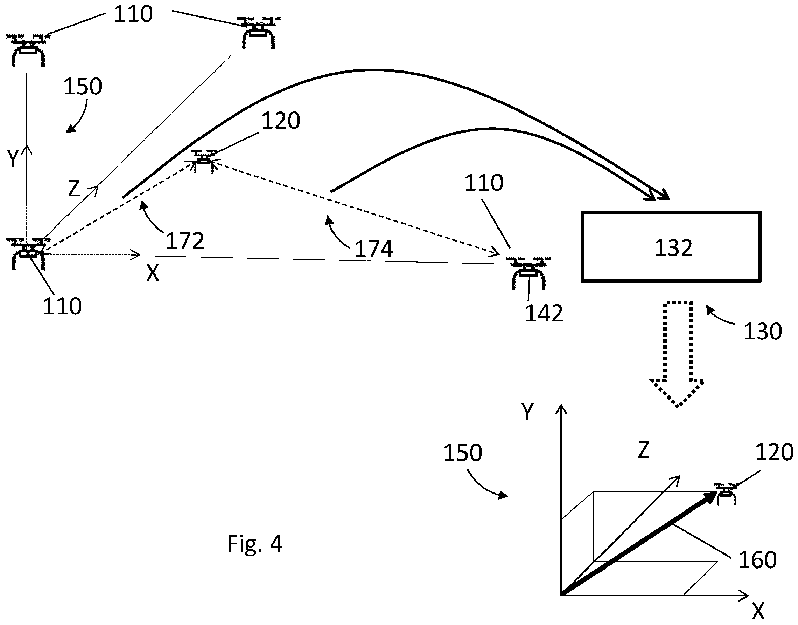

Fig. 4 illustrates one example of a reference frame provided by a first plurality of UAVs 110. As shown in Fig. 4, the reference frame may be formed by four UAVs.

As shown for example in Fig. 4, but not limited thereto, one of the UAVs of the first plurality of UAVs 110 can function as the origin of a coordinate system 150 associated with the first plurality of UAVs 110, e.g. a rectangular cartesian coordinate system. In some implementations, further UAVs of the first plurality of UAVs 110, e.g. three further UAVs, can function as reference points defining coordinate axes of the coordinate system. Apart from cartesian coordinate systems, other coordinate system, like polar or curvilinear coordinate systems, may be associated to the reference frame. Further, the origin of the coordinate system may or may not be located on a position of one of the UAVs of the first plurality of UAVs 110.

The reference frame may allow each point in space to be (uniquely) assigned. In particular, the reference frame may allow each point in a n-dimensional space to be assigned an ordered set of n numbers. A position of each UAV of the second plurality of UAVs 120 may be determined relative to the reference frame formed by the first plurality of UAVs 110. For example, a position of a UAV of the second plurality of UAVs 120 may be represented with respect to the reference frame by a position vector 160, e.g. a 3-dimensional position vector, as illustrated in Fig. 4.

The first plurality of UAVs 110 may be configured to form an arrangement during flight. The arrangement may include two or more UAVs that are spaced apart from each other. The arrangement may include four or more UAVs.

The arrangement formed by the first plurality of UAVs 110 may span or enclose a three-dimensional volume. The UAVs of the first plurality of UAVs 110 may not all lie in a same two-dimensional plane. The UAVs of the first plurality of UAVs 110 may be located on a surface enclosing a three-dimensional volume, for example an outer surface of a substantially regular geometric shape. The surface may be a virtual surface. The UAVs of the first plurality of UAVs 110 may correspond to vertex corners of a geometric shape. The geometric shape may have straight edges formed by virtual connecting lines between two UAVs of the first plurality of UAVs 110, respectively. The arrangement formed by the first plurality of UAVs 110 may represent a substantially regular geometric shape. Particularly, the arrangement may represent a substantially regular three-dimensional geometric shape. For example, a regular three-dimensional geometric shape may be a cuboid or may be a platonic solid like a tetrahedron, a cube or an octahedron.

The volume enclosed or spanned by the first plurality of UAVs 110 may be referred to as the "local navigation volume" (LNV) of the first plurality of UAVs 110. The LNV can be understood as a volume enclosed by a geometric shape formed by the first plurality of UAVs 110. The second plurality of UAVs 120 may be configured to fly or navigate within the LNV, or at least in the vicinity of the LNV.

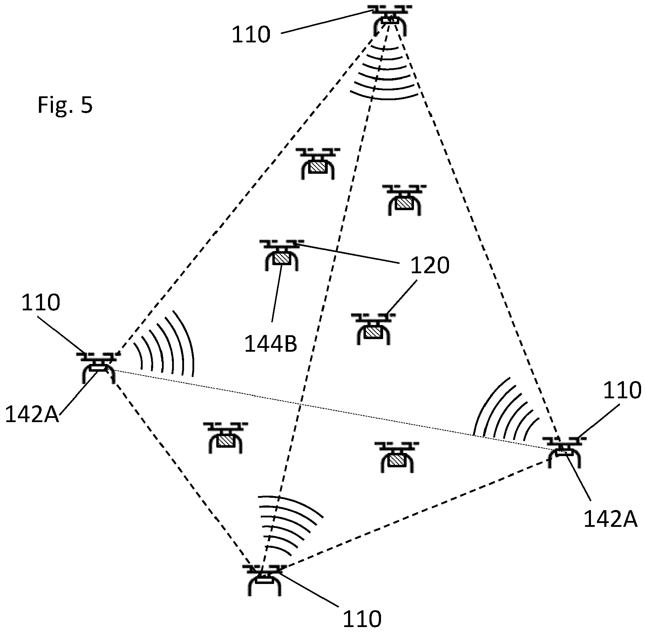

For example, Fig. 5 illustrates an arrangement of four UAVs of the first plurality of UAVs 110 substantially representing a tetrahedron with the four UAVs of the first plurality of UAVs 110 representing the vertex corners of the tetrahedron. The volume enclosed by the virtual tetrahedron may be understood as the LNV of the arrangement of Fig. 5. A tetrahedral arrangement has the advantage that only a small number of UAVs for the first plurality of UAVs 110 are needed for forming a reference frame as described herein. At the same time, a tetrahedron can provide for a relatively large LNV.

For example, eight UAVs of the first plurality of UAVs 110 may substantially represent a cuboid or a cube, with the eight UAVs of the first plurality of UAVs 110 representing the vertex corners of the cuboid. Alternatively, a cuboid may be represented by six UAVs of the first plurality of UAVs 110. For the latter, each three of the six UAVs of the first plurality of UAVs 110 may form a triangle on a surface of the of the cuboid with two of the three UAVs located in adjacent vertex corners of the cuboid and one of the three UAVs located at the center of a straight edge of the cuboid. The two triangles may be arranged inverse and on opposite surfaces of the cuboid.

For forming an arrangement during flight, as described herein, each UAV of the first plurality of UAVs 110 may be positioned at a certain location in space. For example, each UAV of the first plurality of UAVs 110 may be configured to maintain a position for a period of time. For example, the first plurality of UAVs 110 may be configured to maintain a position at a fixed altitude and/or location for a period of time. The arrangement formed by the first plurality of UAVs 110 may be a movable arrangement. The arrangement may be configured to move from a first aerial location to a second aerial location. The dimensions and/or shape of the arrangement and/or of the LNV delimited by the arrangement may be essentially fixed for a period of time, e.g. during part of the aerial display. In some implementations, the dimensions and/or shape of the arrangement and/or of the LNV delimited by the arrangement may be changed during the aerial display performance. In such case, the system can be configured such that the position of each UAV of the changing arrangement is known at each time.

The arrangement formed by the first plurality of UAVs 110 may function as a reference frame, or a reference system, relative to which the UAVs of the second plurality of UAVs 120 are positioned. The UAVs of the first plurality of UAVs 110 may be associated with a coordinate system. The UAVs of the first plurality of UAVs 110 may function as reference points relative to which the positions of the UAVs of the second plurality of UAVs 120 are determined.

In several embodiments, the first plurality of UAVs 110 functions as a second (local) positioning system for the second plurality of UAVs 120. Accordingly, the UAVs of the second plurality of UAVs 120 may be controlled without the need for an elaborately installed positioning system and/or cost-intensive positioning equipment, like GPS, DGPS or RTK positioning equipment.

The position of each UAV of the second plurality of UAVs 120 may be described with respect to the reference frame provided by the first plurality of UAVs 110. The determination of the position of the respective UAV of the second plurality of UAVs 120 may be realized by a control system 130.

A controller as described herein may be understood as a data processing device. A controller may be configured for receiving data. A controller may be configured for processing data. A controller may be configured for outputting data.

For example, each UAV of the first plurality of UAVs and/or each UAV of the second plurality of UAVs may carry a controller of the control system. Additionally or alternatively, the control system may include a controller external to the first plurality of UAVs and external to the second plurality of UAVs. For example, the control system may include a controller at the base system.

The control system may include a plurality of controllers in communication with each other, e.g. by wireless communication.

Each UAV of the first plurality of UAVs may be configured to be in communication with at least one controller of the control system. Each UAV of the second plurality of UAVs may be configured to be in communication with at least one controller of the control system.

The control system may be configured to control a flight trajectory of each UAV of the first plurality of UAVs. The control system may be configured to control a flight trajectory of each UAV of the second plurality of UAVs.

As described herein, the control system is configured for determining a position of each unmanned aerial vehicle of the second plurality of unmanned aerial vehicles with respect to the reference frame based at least on received first measurement data and received second measurement data. The control system may be configured for controlling a flight trajectory of the unmanned aerial vehicle of the second plurality of unmanned aerial vehicles based on the determined position of the unmanned aerial vehicle of the second plurality of unmanned aerial vehicles.

The control system 130 may comprise one or more controllers, e.g. controllers 132 shown in Fig. 1. In Figs. 1 and 5 one controller 132 is illustrated as an external unit, e.g. a ground-based control system. In another embodiment, at least some, or all, of the controllers 132 may be carried by the second plurality of UAVs 120 and/or the first plurality of UAVs 110. According to one aspect, one or more controllers of the control system 130 are carried by the UAVs of the second plurality of UAVs 120. The position of each UAV of the second plurality of UAVs 120 may be calculated directly at the respective UAV of the second plurality of UAVs 120.

The determination of the position of the UAVs of the second plurality of UAVs 120 may allow a flight of the UAVs of the second plurality of UAVs 120 with certain degrees of autonomy, i.e. an autonomous flight. An autonomous flight of an UAV of the second plurality of UAVs 120 does not need manual remote control by a operator but can be carried out automatically.

An autonomous flight of the UAV may be performed by using a script to control the UAV. The script may provide waypoints, e.g. coordinates in space, containing information of where the UAV should go. The script may further include other information, e.g. how fast the UAV should move to the next waypoint or whether the UAV may perform a task at a waypoint (e.g. light on/off). For example, the script may be stored on and/or executed by a controller 132 included in or carried by the UAV itself. In case the controller 132 may also calculate the position of the UAV onboard, a fully autonomous flight of the UAVs of the second plurality of UAVs 120 is possible, i.e. without external communication needed. Alternatively, the script may be stored on and/or executed by a controller 132 external to the UAV, e.g. a control system 130 located at ground level that sends the waypoints to the UAV using an external communication path (e.g. radio-based communication).

The possibility of autonomous flight allows controlling of not only one UAV but of a plurality of UAVs by a single person. In fact, embodiments described herein may allow determination of the positions of any number of UAVs of the second plurality of UAVs 120.

For example, the second plurality of UAVs 120 may comprise 10, 50, 100, 200, or up to 500 or even more UAVs.

In order to determine the position of an UAV of the second plurality of UAVs 120 relative to the reference frame, the control system 130 may perform at least the following operations. The control system 130 may receive first measurement data 172 and second measurement data 174 from the measurement system 140. The first measurement data 172 and the second measurement data 174 may be any data that includes at least partial information of the position of the UAV with respect to a first UAV and a second UAV, respectively, of the first plurality of UAVs 110. For example, the first measurement data 172 may include a distance between the UAV of the second plurality of UAVs 120 and the first UAV of the first plurality of UAVs 110. The second measurement data 174 may include a distance between the UAV of the second plurality of UAVs 120 and the second UAV of the first plurality of UAVs 110. Additionally or alternatively, the first measurement data 172 and the second measurement data 172 may include information about a direction in which the UAV of the second plurality of UAVs 120 is relative to the first UAV and second UAV of the first plurality of UAVs 110, respectively.

The control system 130 may determine the position of the UAV of the second plurality of UAVs 120 with respect to the reference frame based at least on the received first measurement data 172 and the received second measurement data 174. The control system may combine at least the received first measurement data 172 and the received second measurement data 174 with each other to determine the position of the UAV of the second plurality of UAVs 120 with respect to the reference frame. Based on the combination of at least the received first measurement data 172 and the received second measurement data 174, the position of the UAV of the second plurality of UAVs 120 can be fully determined. For example, combining at least the received first measurement data 172 and the received second measurement data 174 may involve triangulation, combination of optical images of the UAV of the second plurality of UAVs 120, and the like, in order to fully determine the position of the UAV of the second plurality of UAVs 120.

The control system 130 may further receive additional measurement data, e.g. a third, a fourth, a fifth, a sixth, a seventh and/or an eighth measurement data including at least partial information of the position of the UAV of the second plurality of UAVs 120 with respect to a third, a fourth, a fifth, a sixth, a seventh and/or an eight UAV of the first plurality of UAVs 110, respectively. The control system 130 may determine the position of the UAV of the second plurality of UAVs 120 with respect to the reference frame, based at least on the received first, second, third, fourth, fifth, sixth, seventh and/or eighth measurement data. The measurement data may be combined with each other to determine, particularly fully determine, the position of the UAV of the second plurality of UAVs 120.

For example, the first plurality of UAVs 110 may comprise at least four UAVs. The control system 130 may be configured to determine a position of each UAV of the second plurality of UAVs 120 with respect to the reference frame formed by the first plurality of UAVs 110 by performing at least the following operations:
- receiving first measurement data from the measurement system, wherein the first measurement data includes partial information about a relative position of the UAV of the second plurality of UAVs with respect to a first UAV of the first plurality of UAVs;
- receiving second measurement data from the measurement system, wherein the second measurement data includes partial information about a relative position of the UAV of the second plurality of UAVs with respect to a second UAV of the first plurality of UAVs;
- receiving third measurement data from the measurement system, wherein the third measurement data may include partial information about a relative position of the UAV of the second plurality of UAVs 120 with respect to a third UAV of the first plurality of UAVs 110; and/or
- receiving fourth measurement data from the measurement system, wherein the fourth measurement data may include partial information about a relative position of the UAV of the second plurality of UAVs 120 with respect to a fourth UAV of the first plurality of UAV 110; and
- determining a position of the UAV of the second plurality of UAVs 120 with respect to the reference frame based on the first measurement data and the second measurement data and further based at least on the third measurement data and/or the fourth measurement data.

As described above, the measurement data is provided by the measurement system 140 comprising a plurality of measurement devices 142, 144, e.g. a plurality of transmitters configured to transmit signals and a plurality of receivers configured to receive the signals.

Each UAV of the first plurality of UAVs may carry at least one measurement device of the plurality of measurement devices of the measurement system. Each UAV of the second plurality of UAVs may carry at least one measurement device of the plurality of measurement devices of the measurement system. The base system may carry at least one measurement device of the plurality of measurement devices of the measurement system.

Each UAV of the first plurality of UAVs 110 and/or each UAV of the second plurality of UAVs 120 may carry an identifier for identifying the UAV. By the identifier, the control system can identify from which UAV a measured signal, e.g. optical signal or radio signal, originates. For example, each transmitter of the plurality of transmitters may be configured to provide an identifier identifying the UAV carrying the respective transmitter. For example, a radio transmitter may be configured to emit radio signals at a characteristic radio frequency. An optical transmitter including two or more light emitting devices (e.g. IR light emitting devices) may be configured to provide an identifier by a characteristic spatial arrangement, or pattern, of the two or more light emitting devices. In another example, an identifier may be provided by a characteristic brightness of the optical transmitter. In another example, the optical transmitter may be configured to modulate the brightness of the emitted light in a characteristic manner.

The plurality of measurement devices may comprise a plurality of transmitters, e.g. radio transmitters or light emitters, configured to transmit signals. The plurality of measurement devices may comprise a plurality of receivers, e.g. radio receiver or optical sensors, configured to receive the signals transmitted by the transmitters. A receiver of the plurality of receivers can be understood as a device configured for receiving signals. A receiver can be a radio receiver for receiving radio signals. A receiver can be an optical receiver for receiving optical signals, e.g. a camera.

For example, at least some, preferably all, of the UAVs of the first plurality of UAVs can carry a transmitter (e.g. a radio transmitter) of the plurality of transmitters, and at least some, preferably all, of the UAVs of the second plurality of UAVs can carry a receiver (e.g. a radio receiver) of the plurality of receivers.

In another example, at least some, preferably all of the UAVs of the first plurality of UAVs can carry a receiver (e.g. an optical sensor like a camera) of the plurality of receivers, and at least some, preferably all, of the UAVs of the second plurality of UAVs can carry a transmitter (e.g. a light emitter such as a LED array) of the plurality of transmitters.

For example, the localization of each UAV of the second plurality of UAVs 120 with respect to the reference frame provided by the first plurality of UAVs 110 may be based on triangulation. The triangulation may be performed by the control system 130 provided with a plurality of measurement data, such as for example first, second, third and fourth measurement data. For example, each UAV of the second plurality of UAVs 120 may carry a radio receiver. The UAV may be located by measuring the distances between the radio receiver and several radio transmitters, carried by respective UAVs of the first plurality of UAVs 110, based on received radio signals from the different radio transmitters. The UAVs of the first plurality of UAVs 110 may function as flying beacons for the second plurality of UAVs 120. A radio signal transmitted by a radio transmitter carried by a UAV of the first plurality of UAVs 110 and received by the UAV of the second plurality of UAVs 120 allows determining a first sphere of a given radius around the first radio transmitter, wherein the radio receiver is located somewhere on the first sphere. By combining radio signals originating from different UAVs of the first plurality of UAVs 110, i.e. by intersecting the associated spheres, the position of the UAV of the second plurality of UAVs 120 can be determined.

For example, Fig. 5 illustrates an embodiment wherein the first plurality of UAVs 110 comprises UAVs carrying radio transmitters 142A configured to transmit radio signals. The radio transmitters 142A may, for example, be UWB (ultra wide band) beacons. The second plurality of UAVs 120 can comprise UAVs carrying radio receivers 144B configured to receive the radio signals of the radio transmitters of the first plurality of UAVs 110. The radio receivers 144B may, for example, be UWB receivers, or UWB tags. The first plurality of UAVs 110 can form an arrangement defining a substantially tetrahedral volume. Other shapes of the arrangement are also possible, as described herein. The second plurality of UAVs 120 can be located inside or close to the volume enclosed by the plurality of first UAVs 110 in order to increase accuracy. The control system 130 may determine the positions of the UAVs of the second plurality of UAVs 120 with respect to the reference frame provided by the first plurality of UAVs 110 based on measurement data for each of the UAVs of the second plurality of UAVs 120. The measurement data may be obtained by sending high frequency radio signals between the radio transmitters 142A and radio receivers 144B of the first and second plurality of UAVs. Thus, the measurement data for each of the UAVs of the second plurality of UAVs 120 may include the distance from the UAV of the second plurality of UAVs 120 to at least two, possibly all, of the four UAVs of the first plurality of UAVs 110. Based for example on triangulation, the control system 130 may determine the position of each of the UAVs of the second plurality of UAVs 120 with respect to the reference frame provided by the first plurality of UAVs.

A system involving radio signals for positioning the second plurality of UAVs 120 relative to the reference frame may be cost-effective because radio transmitters and radio receivers are affordable devices. Moreover, the system 100 may be used with a number of radio standards such that energy efficient standards like Bluetooth Low Energy (BLE) can be supported. In addition, the first plurality of UAVs 110 can be arranged with minimal effort without need of complicated installation of ground-based beacons or similar localization equipment.

The first plurality of UAVs 110 may comprise at least four UAVs. More preferably, the first plurality of UAVs 110 comprises at least six UAVs, for example to add redundancy and/or to improve the accuracy of determining the position of the UAVs of the first plurality of UAVs, e.g. for performing triangulation. The first plurality of UAVs 110 can include at least eight UAVs. In some implementations, the first plurality of UAVs 110 comprises not more than eight UAVs in order to provide a cost-effective and easy manageable system.

The first plurality of UAVs 110 may comprise more than eight UAVs, for example, 16 UAVs or 24 UAVs, or even more. The first plurality of UAVs 110 may include 16 UAVs or less or 24 UAVs or less.

Having a large number of UAVs in the first plurality of UAVs 110, e.g. more than eight UAVs, may be preferable for scaling to larger LNVs or for spanning multiple LNVs. The latter for example, may also be possible even without a line of sight between the UAVs in the first plurality of UAVs 110. A large number of UAVs may also be advantageous for a more robust system that can handle loss or addition of UAVs in the first plurality of UAVs 110 dynamically.

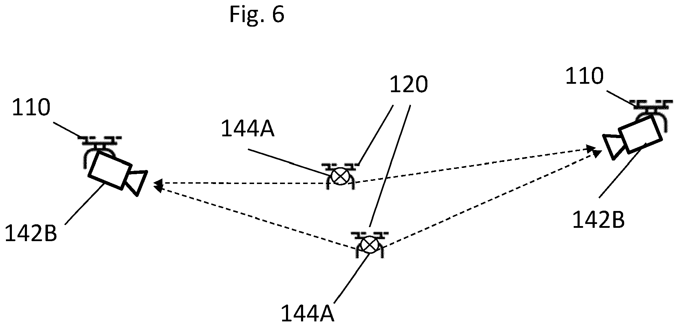

The first plurality of UAVs 110 may comprise less than four UAVs, for example, two or three UAVs. A small number of UAVs for the first plurality of UAVs 110 may be used, for example, in situations where certain degrees of freedom are eliminated. For example, in some implementations, the UAVs of the second plurality of UAVs may only be located in a certain two-dimensional area. Another example of a system wherein the first plurality of UAVs 110 includes a small number of UAVs, such as two UAVs, is illustrated in Fig. 6.

Fig. 6 shows an example of a system in which the position of the UAVs of the second plurality of UAVs is determined by using a reference system including only two UAVs. For each UAV of the second plurality of UAVs 120, the measurement system 140 provides only first measurement data and second measurement data. For each UAV of the second plurality of UAVs 120, the respective first measurement data and second measurement data include partial information of the position the UAV of the second plurality of UAVs 120 with respect to a first UAV and a second UAV of the first plurality of UAVs 110.

As illustrated in Fig. 6, each UAV of the first plurality of UAVs 110 can carry an optical receiver 142B, for example an IR sensitive camera. In some implementations, each UAV of the first plurality of UAVs 110 can carry two optical receivers 142B (not shown in Fig. 6). Each UAV of the second plurality of UAVs 120 can carry an optical transmitter 144A, for example an IR light emitting device, such as an IR LED. In some implementations, each UAV of the second plurality of UAVs can carry two optical transmitters 144A (not shown in Fig. 6).The optical receivers 142B carried by the two UAVs of the first plurality of UAVs 110 may receive the optical signals of the optical transmitter 144A carried by each UAV of the second plurality of UAVs. The optical receivers 142B carried by the first and the second UAV of the first plurality of UAVs 110 may provide first measurement data and second measurement data, e.g. a first picture and a second picture of the UAV, respectively. The first measurement data and the second measurement data may include information about the distance of the UAV with respect to the first and second UAV of the first plurality of UAVs 110. Moreover, the first measurement data and the second measurement data may include information about a direction in which the UAV of the second plurality of UAVs 120 is located relative to the first and second UAVs of the first plurality of UAVs 110. For example, an optical receiver like a camera may receive optical signals of IR-light emitting devices only in a limited field of view, e.g. a camera whose lens is oriented in a certain direction. Accordingly, the direction of the UAV of the second plurality of UAVs 120, e.g. whether the UAV is on the right or left of the first and/or second UAV of the first plurality of UAVs 110, may be derived from the first measurement data and the second measurement data. Such an optical-based determination of positions of an UAV of the second plurality of UAVs 120 eliminates certain degrees of freedom and, thus, may allow for the determination of the position of an UAV of the second plurality of UAVs 120 with only two UAVs for the first plurality of UAVs 110 and only first and second measurement data for the controls system.

Although Fig. 6 shows only one optical receiver 142B or only one optical transmitter 144A carried by each UAV, it is to be understood that one UAV may also carry more than one optical receiver 144B and/or more than one optical transmitter 144A, respectively, e.g. two optical receivers 144B and/or two optical transmitters 144A.

Each UAV of the second plurality of UAVs 120 may be within, or very close, to the LNV delimited by the arrangement of the first plurality of UAVs 110. The localization of an UAV of the second plurality of UAVs 120 with respect to the reference frame may be more accurate if the UAV is located within or very close to the arrangement formed by the first plurality of UAVs 110. The LNV may be chosen such that the measurements of the measurement system can be performed, e.g. for obtaining at least the first and the second measurement data. It is beneficial that the LNV is not larger than the signal strength of the plurality of transmitters and/or the sensitivity of the plurality of receivers allows. The LNV may be defined by the arrangement of the first plurality of UAVs and by the ability to perform the measurements with the measurement system to provide at least the first and second measurement data.

The UAVs of the second plurality of UAVs 120 may be configured to execute a flight plan. In particular, the UAVs of the second plurality of UAVs 120 may be configured to execute a flight plan within the LNV. For example, at least some, preferably all, UAVs of the second plurality of UAVs 120 may be configured to fly autonomously, i.e. without manual remote control by a person, according to a flight plan by following a trajectory defined by waypoints, respectively.

The flight plan or trajectory for each UAV of the second plurality of UAVs 120 may be stored on a controller or processor in the UAV itself. Alternatively, the flight plan or trajectory for each UAV of the second plurality of UAVs 120 may be stored in a controller 132 external to the UAV and may be transmitted to the UAV in real time.

According to one embodiment, the system may be configured to perform an aerial display. The UAVs of the second plurality of UAVs may act as aerial picture elements of the aerial display. The aerial display may be an aerial display screen or a 3-dimensional display air space. The aerial display may be performed in an aerial space corresponding to the LNV delimited by the arrangement of the first plurality of UAVs 110.

The at least some, preferably all, UAVs of the second plurality of UAVs acting as picture elements may perform a synchronized flight, for example, such that the picture elements form an image. The system 100 may be configured for navigation of multiple UAVs performing synchronized flight maneuvers. For example, the at least some, preferably all, UAVs of the second plurality of UAVs may carry a light source like an LED or LED array. An observer, for example on the ground, may experience this light source as a picture element in the sky.

A sequence of light events, e.g. switching the light sources on or off and/or changing color of the light sources, can be performed by the UAVs of the second plurality of UAVs 120 during the aerial show. Instructions for performing the sequence of light events can be either stored in the UAV itself or transmitted to the UAV in real time.

According to one aspect, the system may comprise a base system 190. The base system may be located at ground level. The control system 130 may be configured to determine a position of at least some, preferably all, UAVs of the first plurality of UAVs 110 with respect to the base system 190. The localization with respect to the base system may be, for example, radio-based localization or optical based localization.

In some implementations, all UAVs of the first plurality of UAVs are positioned with respect to the base system. In other implementations, a subset of the first plurality of UAVs including only some, for example, one, two, three or four, UAVs of the first plurality of UAVs 110 are positioned with respect to the base system. Other UAVs of the first plurality of UAVs, i.e. UAVs outside of said subset, may be positioned with respect to the UAVs in said subset. In other words, the UAVs in the subset, which are themselves positioned with respect to the base system, may serve as a reference system relative to which the UAVs outside the subset can be positioned.

For determining a position of an UAV of the first plurality of UAVs 110 during flight, a first positioning system may be used or provided. The first positioning system may be part of a system 100 according to embodiments described herein, or may be external to said system.

For example, the base system 190 may provide the first positioning system for the first plurality of UAVs. For example, the first positioning system may include a global coordinate system and/or a satellite navigation system such as a global positioning system (GPS). The first plurality of UAVs 110 may be located or positioned using the first positioning system. According to one aspect, the UAVs of the first plurality of UAVs 110 may be provided with a satellite navigation receiver. The first plurality of UAVs 110 may be provided with long-range positioning equipment.

According to one aspect, the measurement system 140 is a first measurement system. The system 100 may further include a second measurement system 240. The second measurement system 240 may comprise a second plurality of measurement devices, e.g. measurement devices 242, 244 shown in Fig. 2.

Each measurement device of the second plurality of measurement devices may be carried by an UAV of the first plurality of unmanned aerial vehicles 110 or the base system.

Each UAV of the first plurality of UAVs may carry at least one measurement device of the second plurality of measurement devices. For example, the at least one measurement device may include at least one of the following: a measurement device for optical localization; a measurement device for radio-based localization; an inertial measurement unit; GPS positioning equipment; DGPS positioning equipment, RTK positioning equipment; or any combination thereof. Such devices have the advantage of allowing a high-accuracy localization of the first plurality of UAVs with respect to the base system.

Each UAV of the first plurality of UAVs may carry at least one measurement device of the second plurality of measurement devices and at least one measurement device of the first plurality of measurement devices.

The base system may carry at least one measurement device of the second plurality of measurement devices.

For each UAV of the first plurality of UAVs 110, the second measurement system 240 may be configured to perform measurements providing at least partial information about relative positions between the base system and the UAV of the first plurality of UAVs 110. The control system 130 may be configured to determine a position of each UAV of the first plurality of UAVs 120 with respect to the base system using the measurements performed by the second measurement system.

The base system 190 may carry at least a first measurement device and a second measurement device of the second measurement system, as indicated for example in Fig. 2. The control system 130 may be configured to determine a position of each UAV of the first plurality of UAVs 110 with respect to the base system by performing at least the following operations. The control system may receive first data from the second measurement system, the first data including partial information about a relative position of the UAV of the first plurality of UAVs 110 with respect to the first measurement device of the base system. The control system may receive second data from the second measurement system, the second data including partial information about a relative position of the UAV of the first plurality of UAVs 110 with respect to the second measurement device of the base system. The control system 130 may determine a position of the UAV of the first plurality of UAVs 110 based at least on the received first data and the received second data. The control system may combine at least the received first data and the received second data to determine the position of the UAV of the first plurality of UAVs 110. The position of the UAV may be determined with respect to a global coordinate system or a coordinate system provided by the base system, for example.

The localization of the first plurality of UAVs 110 with respect to the base system may be performed, for example, by using radio-based methods or optical methods, in which the position of each UAV is determined by combining measurements performed by the second measurement system relating the UAV to different points of the base system. These methods may be similar to the methods described herein for localizing the second plurality of UAVs with respect to the reference frame formed by the first plurality of UAVs using the first measurement system.

For example, the second plurality of measurement devices may include one or more radio transmitters at the base system. The radio transmitters can be radio beacons, e.g. UWB (ultra wide band) anchors or RTK beacons. The second plurality of measurement devices may include a radio receiver carried by each UAV of the first plurality of UAVs 110. The radio receiver can be particularly a radio tag, such as e.g. an UWB tag or RTK receiver. Each UAV of the first plurality of UAVs 110 may be positioned relative to the base system by measuring, for example, the distance from the UAV to the different radio beacons of the base system and by determining the position of the UAV by combining the measured distances, e.g. via triangulation.

In another example, the second plurality of measurement devices may include one or more optical receivers at the base system. The one or more optical receivers may be optical sensors, like IR sensitive video cameras. The second plurality of measurement devices may include an optical transmitter carried by each UAV of the first plurality of UAVs 110. The optical transmitter may be an optical marker e.g. including one or more IR LEDs. Each UAV of the first plurality of UAVs 110 may be positioned during flight relative to the base system by combining images of the UAV taken by several of the cameras.

In another example, the second plurality of measurement devices may include an optical transmitter at the base system. The optical transmitter may be an optical marker, such as e.g. an arrangement of IR LEDs. Such an optical marker may be beneficial to initialize the localization of first plurality of UAVs in the vicinity of the base system, i.e. at an initial take-off phase. The second plurality of measurement devices may include one or more optical receivers, like IR sensitive video cameras, carried by each UAV of the first plurality of UAVs 110.

For example, each UAV of the first plurality of UAVs 110 may run a Simultaneous Localization And Mapping (SLAM) algorithm to localize itself. Alternatively, raw or preprocessed video streams can be streamed to the base system, where the streams get processed. The resulting UAV locations may be transmitted to the respective UAVs of the first plurality of UAVs 110.

Any of the above-mentioned localization principles for the first and second plurality of UAVs can be supported by an on-board Inertial Measurement Unit (IMU), in order to improve the stability of the UAV localization. Further, the above-mentioned localization principles can be combined with each other, e.g. using sensor fusion techniques, in order to improve the accuracy and stability of the UAV localization.

According to a further embodiment, a method for determining positions of UAVs during flight is provided. Embodiments of the method may be carried out by one of the disclosed embodiments of the system for determining positions of UAVs during flight as described above.

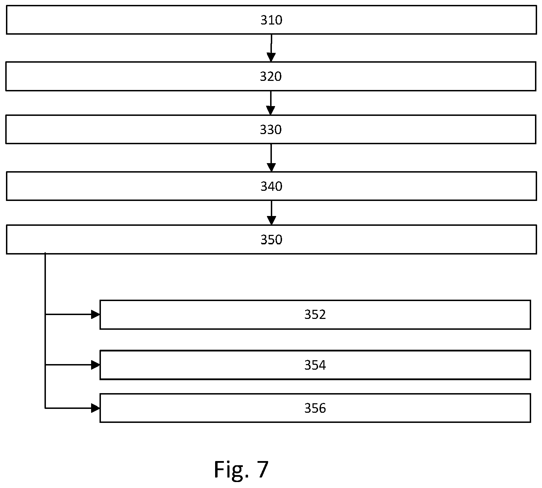

Fig. 7 illustrates a method for determining positions of UAVs during flight as described herein. The method comprises, at block 310, providing a take-off of a first plurality of UAVs 110. At block 330, the first plurality of UAVs 110 is operated to form an arrangement functioning as a reference frame. The method includes providing a take-off of a second plurality of UAVs 120 (block 320). After take-off, the second plurality of UAVs 120 may be positioned in or near a local navigation volume that is delimited by the arrangement of the first plurality of UAVs. The arrangement of the first plurality of UAVs 110 may have a substantially regular shape, as described above. For example, the arrangement may have a tetrahedral shape including four UAVs or a cubic shape including eight UAVs. The UAVs of the first plurality of UAVs 110 can represent the vertex edges of the respective geometric shape. The second plurality of UAVs may be located with respect to the reference frame provided by the first plurality of UAVs 110, as described herein. The method further comprises performing a plurality of measurements using a measurement system 140, at block 340. The measurements may provide, for each UAV of the second plurality of UAVs 120, at least partial information about a relative position of the UAV of the second plurality of UAVs 120 with respect to at least two UAVs of the first plurality of UAVs 110. The method further comprises determining a position of each UAV of the second plurality of UAVs with respect to the reference frame using a control system 130, at block 350.

The take-off of the first plurality of UAVs, the forming of the arrangement functioning as the reference frame and the take-off of the second plurality of UAVs can be performed in this order. The take-off of the second plurality of UAVs can be performed after the arrangement functioning as the reference frame has been formed by the first plurality of UAVs.

The control system 130 may comprise one or more controllers. For example, one controller 132 may be located at the ground level. In another example, each UAV of the second plurality of UAVs carry one controller 132 of the control system 130. Accordingly, the position of each UAV of the second plurality of UAVs can be determined directly on board.

The determination of the position of a UAV of the second plurality of UAVs with respect to the reference frame may be performed by at least the following operations:
1) Receiving first measurement data 172 from the measurement system 130 (block 352), wherein the first measurement data includes partial information about a relative position of the respective UAV of the second plurality of UAVs 120 with respect to a first UAV of the first plurality of UAVs 110, e.g. a distance between the UAV of the second plurality of UAVs 120 and the first UAV;
2) Receiving second measurement data 174 from the measurement system 130 (block 354), wherein the second measurement data includes partial information about a relative position of the respective UAV of the second plurality of UAVs 120 with respect to a second UAV of the first plurality of UAVs 110, e.g. a distance between the UAV of the second plurality of UAVs 120 and the second UAV; and
3) Determining a position, e.g. a position vector 160, of the respective UAV of the second plurality of UAVs with respect to the reference frame based at least on the received first measurement data and the received second measurement data (block 356).

Embodiments of the methods may be carried out by one of the disclosed embodiments of the system for determining positions of UAVs during flight. Furthermore, embodiments according to the disclosure are also directed at methods for operating the described system. The methods for operating the described system include method aspects for carrying out every function of the system.

The measurement system 140 may comprise any measurement devices as described above.

The method may further include moving the arrangement of the first plurality of UAVs from a first aerial location to a second aerial location. For example the first aerial location may be close to a base system from which the take-offs took place, wherein the second aerial location may be more far away from the ground, i.e. at a higher altitude. The position of each UAV of the second plurality of UAVs with respect to the reference system provided by the first plurality of UAVs may remain mainly constant. The second plurality of UAVs may move to the second aerial location together with the arrangement of the first plurality of UAVs.

The method may further comprise executing a flight plan by the second plurality of UAVs 120.

According to one embodiment, the method may further comprise performing an aerial display, wherein at least some, preferably all, UAVs of the second plurality of UAVs act as aerial picture elements of the aerial display. The at least some, preferably all, UAVs of the second plurality of UAVs may carry a light source as described herein.

The method may further comprise determining a position of each UAV of the first plurality of UAVs relative to a base system. This determination may be performed by using measurements performed by the second measurement system as described above.

While the foregoing is directed to embodiments of the disclosure, other and further embodiments of the disclosure may be devised without departing from the basic scope thereof, and the scope thereof is determined by the claims that follow.

## Claims

1. System (100) for determining positions of unmanned aerial vehicles during flight, the system comprising:
a first plurality of unmanned aerial vehicles (110);
a second plurality of unmanned aerial vehicles (120);
a control system (130) comprising one or more controllers (132); and
a measurement system (140) comprising a plurality of measurement devices (142, 144), wherein each measurement device (142, 144) of the plurality of measurement devices is carried by an unmanned aerial vehicle of the first plurality of unmanned aerial vehicles (110) or by an unmanned aerial vehicle of the second plurality of unmanned aerial vehicles (120),
wherein the measurement system (140) is configured to perform measurements providing at least partial information about relative positions between unmanned aerial vehicles of the first plurality of unmanned aerial vehicles (110) and unmanned aerial vehicles of the second plurality of unmanned aerial vehicles (120),
wherein the first plurality of unmanned aerial vehicles (110) is configured to form an arrangement functioning as a reference frame relative to which the unmanned aerial vehicles of the second plurality of unmanned aerial vehicles (120) are located, wherein the control system (130) is configured to determine a position of each unmanned aerial vehicle of the second plurality of unmanned aerial vehicles (120) with respect to the reference frame by performing at least the following operations:
receiving first measurement data (172) from the measurement system, the first measurement data including partial information about a relative position of the unmanned aerial vehicle of the second plurality of unmanned aerial vehicles (120) with respect to a first unmanned aerial vehicle of the first plurality of unmanned aerial vehicles;
receiving second measurement data (174) from the measurement system, the second measurement data including partial information about a relative position of the unmanned aerial vehicle of the second plurality of unmanned aerial vehicles with respect to a second unmanned aerial vehicle of the first plurality of unmanned aerial vehicles; and
determining a position of the unmanned aerial vehicle of the second plurality of unmanned aerial vehicles with respect to the reference frame based at least on the received first measurement data and the received second measurement data.

2. The system of claim 1, wherein the system is configured to perform an aerial display, wherein at least some unmanned aerial vehicles of the second plurality of unmanned aerial vehicles (120) carry a light source (122) and are configured to act as aerial picture elements of the aerial display (180).

3. The system of any of the previous claims, wherein the second plurality of unmanned aerial vehicles has a greater number of unmanned aerial vehicles than the first plurality of unmanned aerial vehicles, in particular, wherein the number is at least two times greater.

4. The system of any of the previous claims, wherein at least some unmanned aerial vehicles of the first plurality of unmanned aerial vehicles are unmanned aerial vehicles of a first type and at least some unmanned aerial vehicles of the second plurality of unmanned aerial vehicles are unmanned aerial vehicles of a second type, wherein the second type is different from the first type.

5. The system of claim 4, wherein an unmanned aerial vehicle of the second type has a size or weight which is smaller than a size or weight, respectively, of an unmanned aerial vehicle of the first type.

6. The system of any of the previous claims, wherein the plurality of measurement devices comprises a plurality of transmitters (142A, 144A) configured to transmit signals and a plurality of receivers (142B, 144B) configured to receive the signals,
wherein at least some unmanned aerial vehicles of the first plurality of unmanned aerial vehicles (110) carry a transmitter (142A) of the plurality of transmitters, and at least some unmanned aerial vehicles of the second plurality of unmanned aerial vehicles carry a receiver (144B) of the plurality of receivers, or
wherein at least some unmanned aerial vehicles of the first plurality of unmanned aerial vehicles (110) carry a receiver (142B) of the plurality of receivers, and at least some unmanned aerial vehicles of the second plurality of unmanned aerial vehicles (120) carry a transmitter (144A) of the plurality of transmitters.

7. The system of claim 6, wherein the plurality of transmitters includes a plurality of optical transmitters configured to transmit optical signals and/or a plurality of radio transmitters configured for transmitting radio signals, and
wherein the plurality of receivers includes a plurality of optical receivers configured to receive optical signals and/or a plurality of radio receivers configured to receive radio signals.

8. The system of any of the previous claims, wherein the arrangement formed by the first plurality of unmanned aerial vehicles for functioning as the reference frame has a substantially regular geometric shape.

9. The system of any of the previous claims, further comprising:
a base system (190), particularly wherein the base system is configured to be located at ground level,
wherein the control system (130) is configured to determine a position of each unmanned aerial vehicle of the first plurality of unmanned aerial vehicles (110) relative to the base system (190).

10. The system of claim 9, wherein the measurement system (140) is a first measurement system, wherein the system further comprises a second measurement system (240) comprising a second plurality of measurement devices (242, 244), wherein each measurement device of the second plurality of measurement devices is carried by an unmanned aerial vehicle of the first plurality of unmanned aerial vehicles (110) or the base system (190),
wherein the second measurement system is configured to perform measurements providing at least partial information about relative positions between the base unit and the unmanned aerial vehicles of the first plurality of unmanned aerial vehicles (110),
wherein the control system (130) is configured to determine a position (160) of each unmanned aerial vehicle of the first plurality of unmanned aerial vehicles (110) with respect to the base system (190) using the measurements performed by the second measurement system (240).

11. Method for determining positions of unmanned aerial vehicles during flight, the method comprising:
- providing take-off of a first plurality of unmanned aerial vehicles (110);
- providing take-off of a second plurality of unmanned aerial vehicles (110);
- operating the first plurality of unmanned aerial vehicles (110) to form an arrangement functioning as a reference frame relative to which the second plurality of unmanned aerial vehicles (120) are located;
- performing a plurality of measurements using a measurement system (140) to obtain, for each unmanned aerial vehicle of the second plurality of unmanned aerial vehicles, at least partial information about a relative position of the unmanned aerial vehicle of the second plurality of unmanned aerial vehicles with respect to at least two unmanned aerial vehicles of the first plurality of unmanned aerial vehicles (110);
- determining a position (160) of each unmanned aerial vehicle of the second plurality of unmanned aerial vehicles (120) with respect to the reference frame using a control system (130) performing at least the following operations:
- receiving first measurement data (172) from the measurement system, the first measurement data (172) including partial information about a relative position of the unmanned aerial vehicle with respect to a first unmanned aerial vehicle of the first plurality of unmanned aerial vehicles;
- receiving second measurement data (174) from the measurement system, the second measurement data including partial information about a relative position of the unmanned aerial vehicle with respect to a second unmanned aerial vehicle of the first plurality of unmanned aerial vehicles; and
- determining a position (160) of the unmanned aerial vehicle with respect to the reference frame based at least on the received first measurement data (172) and the received second measurement data (172).

12. Method of claim 11, further comprising:
- performing an aerial display, wherein at least some unmanned aerial vehicles of the second plurality of unmanned aerial vehicles (120) carry a light source and act as aerial picture elements of the aerial display.

13. Method of one of the previous claims, wherein at least some unmanned aerial vehicles of the first plurality of unmanned aerial vehicles (110) are unmanned aerial vehicles of a first type and at least some unmanned aerial vehicles of the second plurality of unmanned aerial vehicles (120) are unmanned aerial vehicles of a second type, wherein the second type is different from the first type.

14. Method of one of the previous claims, wherein the second plurality of unmanned aerial vehicles (120) has a greater number of unmanned aerial vehicles than the first plurality of unmanned aerial vehicles (110).

15. Method of any of the previous claims, further comprising:
- determining a position of each unmanned aerial vehicles of the first plurality of unmanned aerial vehicles (110) relative to a base system (190).
